# EUROPEAN PATENT APPLICATION

(11) **EP 4 389 501 A1**
(43) Date of publication of application: **26.06.2024**
(21) Application number: 22945294.1
(22) Date of filing: 09.06.2022
(51) Int. Cl.: B60L 53/00, B60S 5/06, H01M 50/244

(54) **BATTERY POSITIONING APPARATUS, METHOD, COMPARTMENT BASE, BATTERY SWAP STATION AND ELECTRIC APPARATUS**

(71) Applicant: Contemporary Amperex Technology Co., Limited, Ningde, Fujian 352100 (CN)
(72) Inventor: QUE, Shibiao, Xiamen, Fujian 361001 (CN)
(74) Representative: Jacob, Reuben Ellis
(86) International application number: PCT/CN2022/097913
(87) International publication number: WO 2023/236149

(57) **Abstract**

Provided in the embodiments of the present application are a battery positioning apparatus, a method, a compartment base, a battery swap station, and an electric apparatus. The positioning apparatus comprises: a guide post, the guide post being used for guiding the position of a battery; a positioning pin, the position pin being used for positioning the battery; and a sensor, the sensor being used for checking whether the battery is located in place on the compartment base. In the technical solution in the embodiments of the present application, the battery can be successfully placed into the compartment base during a battery swap process.

## Description

### Technical Field

The present application relates to the technical field of batteries, and in particular, to a positioning apparatus and method for a battery, a compartment base, a battery swapping station, and an electrical apparatus.

### Background

With the development of a new energy technology, batteries are applied to more and more fields. For example, batteries can provide power for or supply power to electrical apparatuses. In a case that a battery of an electrical apparatus is insufficient to support operations of the electrical apparatus, a charging device can be used to charge the electrical apparatus, that is, to charge the battery in the electrical apparatus, so as to achieve charging and discharging cycles of the battery. However, it takes long time to charge the battery. During the charging, the electrical apparatus cannot be operated, which brings great inconvenience to users.

In order to improve the user experience, a battery swapping technology has come into being. A battery with insufficient power of the electric apparatus can be swapped for a battery with sufficient power in a battery swapping station. The battery with insufficient power can be charged in the battery swapping station. The charged battery can be used as a battery for swapping for an electrical apparatus entering the battery swapping station for battery swapping.

During the battery swapping, how to successfully put a battery on a compartment base is an urgent problem needing to be solved.

### Summary of the Invention

Embodiments of the present application provide a positioning apparatus and method for a battery, a compartment base, a battery swapping station, and an electrical apparatus, which can successfully put a battery on a compartment base.

A first aspect provides a positioning apparatus for a battery. The positioning apparatus includes: a guide post configured to guide a position of the battery; a positioning pin configured to position the battery; and a sensor configured to detect whether the battery is put in place on a compartment base.

In the embodiments of the present application, when the battery is put into the compartment base, the battery is put in a direction where the compartment base is located. When the battery is just put into the compartment base, if there is a large error between the battery and the compartment base, the guide post in the positioning apparatus can guide the position of the battery and adjust the large position error of the battery. As the battery continues to be put on the compartment base, when the battery has a small error on the compartment base, the positioning pin in the positioning apparatus can precisely position the battery and adjust the small position error of the battery. Finally, when the battery is completely put on the compartment base, the sensor is used to detect whether the battery is put in place on the compartment base. When the battery is put into the compartment base, the position of the battery in the compartment base is calibrated using the positioning apparatus including the guide post, the positioning pin, and the sensor, so that the battery can be successfully put on the compartment base.

In a possible embodiment, the guide post is arranged at the compartment base.

In the embodiment of the present application, the guide post guides the position of the battery on the compartment base and adjusts a position deviation of the battery in the process of putting the battery into the compartment base. Therefore, the guide post arranged at the compartment base can effectively act on the battery, thereby effectively adjusting the position deviation of the battery.

In a possible implementation, the guide post protrudes from the compartment base.

In the embodiments of the present application, the guide post is arranged on the compartment base and is configured to adjust the position of the battery put on the compartment base. The guide post protrudes from the compartment base, which can ensure the position adjustment effect of the guide post on the battery.

In a possible implementation, the guide post is provided with at least one slope structure.

In the embodiments of the present application, the slope structure is arranged on the guide post, and the battery can easily move on the slope, thereby achieving the position adjustment performed on the battery by the guide post.

In a possible implementation, a ratio of a cross-sectional area of one end of the guide post far from the compartment base to a cross-sectional area of one end close to the compartment base ranges from 1: 10 to 1: 2.

In the embodiments of the present application, the guide post protrudes from the compartment base, and the protruding portion is provided with a slope structure. The guide post can use the slope structure to better guide the position of the battery. The ratio of the cross-sectional area of the end of the guide post far from the compartment base to the cross-sectional area of the end close to the compartment base is limited to 1: 10 to 1: 2, that is, the cross-sectional area of the end of the guide post far from the compartment base is smaller than the cross-sectional area of the end of the guide post close to the compartment base, so that the guide post can stably support the battery due to a large bottom area, and the portion having a smaller area and in contact with the battery can further improve the convenience of guide performed by the guide post on the battery.

In a possible implementation, the positioning pin is arranged at the compartment base.

In the embodiments of the present application, the positioning pin precisely positions the battery on the compartment base and adjusts the small position deviation of the battery in the process of putting the battery into the compartment base. Therefore, the positioning pin arranged on the compartment base can effectively act on the battery, thereby effectively positioning the battery and adjusting the position deviation of the battery.

In a possible implementation, the positioning pin protrudes from the compartment base.

In the embodiments of the present application, the positioning pin is arranged on the compartment base and is configured to adjust the position of the battery put on the compartment base. The positioning pin protrudes from the compartment base, which can ensure the positioning and position adjustment effects of the positioning pin on the battery.

In a possible implementation, a distance between the positioning pin and the guide post is within a preset range.

In the embodiments of the present application, the guide post and the positioning pin play a role of adjusting the position of the battery on the compartment base. Keeping the positions of both the guide post and the positioning pin within a certain range is conductive to causing the guide post and the positioning pin to act on the battery at the same time, thereby enhancing the position adjustment effect on the battery on the compartment base.

In a possible implementation, the preset range is 10-50 mm.

In the embodiments of the present application, keeping the position distance between the guide post and the positioning pin within 10-50 mm can enhance the position adjustment effect on the battery on the compartment base.

In a possible implementation, a quantity of the guide post and a quantity of the positioning pin are at least four, respectively.

In the embodiments of the present application, the battery is put into the compartment base, and there will be no large area difference between the battery and the compartment base. There will be large area differences between both the guide post and the positioning pin and the battery. Therefore, if there is only one guide post or one positioning pin, the guide post and the positioning pin will have a minimal position adjustment effect on the battery. The quantity of the guide post and the quantity of the positioning pin are set to be at least four, which is conductive to causing the guide posts and the positioning pins to adjust the position of the battery in multiple directions and enhancing their position adjustment effects on the battery.

In a possible implementation, the guide posts and the positioning pins are symmetrically distributed about a center of the compartment base.

In the embodiments of the present application, in order to allow the guide posts and the positioning pins to act on multiple portions of the battery, the quantity of the guide post and the quantity of the positioning pin are set to be at least four. The reasonable position distribution of the guide posts and the positioning pins is also conducive to further enhancing the position adjustment effect on the battery. The at least four guide posts and the at least four positioning pins are symmetrically distributed about the center of the compartment base respectively, so that acting forces on the battery between the at least four guide posts and the at least four positioning pins are balanced to further enhance the position adjustment on the battery, thereby ensuring that the battery is successfully put onto the compartment base.

In a possible implementation, the positioning pins are far from the center relative to the guide posts.

In the embodiments of the present application, the guide posts are configured to guide the position of the battery when the battery has a large position error on the compartment base. The positioning pins are configured to precisely position the battery on the compartment base, so that the positioning pins are far from the center relative to the guide posts. That is, compared with the guide posts, the positioning pins are far from the center of the compartment base. In this way, after the guide posts guide the position of the battery to eliminate the large position error, the positioning pins then precisely position the battery and perform minor position adjustment.

In a possible implementation, the guide posts and the positioning pins are matched with positioning slots of the battery.

In the embodiments of the present application, the guide posts and the positioning pins are both arranged on a plane where the compartment base is located, and protrude from the compartment base. The guide posts and the positioning pins work in a process of lowering the battery and putting it on the compartment base. The battery is provided with a plurality of positioning slots. If the guide posts and the positioning pins are matched with the positioning slots on the battery, the battery will be successfully put on the compartment base.

In a possible implementation, a radial distance of the guide post on the compartment base does not exceed 50 mm.

In the embodiments of the present application, the radial distance of the guide post on the compartment base does not exceed 50 mm. That is, regardless of the shape of the guide post, a maximum size on the compartment base does not exceed 50 mm. Since the radial distance is limited to not exceed 50 mm, the guide post will not occupy an excessive area of the compartment base while achieving the effect of guiding the position of the battery.

In a possible implementation, the guide post is a cuboid, and the guide post on the compartment base has a length not exceeding 40 mm and a width not exceeding 30 mm.

In the embodiments of the present application, in order to prevent the guide post from occupying a large area of the compartment base, the radial distance of the guide post on the compartment base is limited to not exceed 50 mm. When the guide post is the cuboid, a cross section of the guide post on the plane where the compartment base is located is rectangular. The length of the rectangle does not exceed 40 mm, and the width does not exceed 30 mm, that is, a diagonal of the rectangle does not exceed 50 mm, which meets the requirement that the radial distance does not exceed 50 mm. The guide post is a regularly-shaped cuboid, which can lower the difficulty in the production process and facilitate manufacturing.

In a possible implementation, a height of the guide post relative to the compartment base does not exceed 300 mm.

In the embodiments of the present application, the guide post is arranged on the compartment base and protrudes from the compartment base. That is, the guide post has a certain height relative to the compartment base. If the height is too large, the guide post may collide with the positioning slot on the battery after the battery is put in the compartment base. Therefore, the height of the guide post relative to the compartment base is limited to not exceed 300 mm, which can match the guide post with the positioning slot on the battery.

In a possible implementation, a radial distance of the positioning pin on the compartment base does not exceed 10 mm.

In the embodiments of the present application, the radial distance of the positioning pin on the compartment base does not exceed 10 mm. That is, regardless of the shape of the positioning pin, a maximum size on the compartment base does not exceed 10 mm. Since the radial distance is limited to not exceed 10 mm, the positioning pin will not occupy an excessive area of the compartment base while achieving the effect of precisely positioning the battery.

In a possible implementation, a quantity of the sensor is at least one.

In the embodiments of the present application, the sensor is configured to detect whether the battery is put in place on the compartment base.

In a possible implementation, the sensor is arranged diagonally.

In the embodiments of the present application, the sensor is configured to detect whether the battery is put in place on the compartment base. The sensor is arranged diagonally, which can enhance the detection effect of the sensor on whether the battery is put in place.

In a possible implementation, a sensing error of the sensor does not exceed 10 mm.

In the embodiments of the present application, the sensor is configured to detect whether the battery is put in place on the compartment base. If a distance between the battery and the sensor does not exceed 10 mm, although the battery has a certain position error on the compartment base, the battery is still successfully put on the compartment base. If a distance between the battery and the sensor exceeds 10 mm, it indicates that the battery is not successfully put on the compartment base.

In a possible implementation, the positioning apparatus further includes a controller; the sensor is further configured to detect a condition of the battery on the compartment base and send a sensing signal to the controller; the controller is configured to determine that the battery is put in place on the compartment base if the sensing signal is received; or the controller is configured to confirm that the battery is not put in place on the compartment base if the sensing signal is not received.

In the embodiments of the present application, the sensor will send the sensing signal to the controller after detecting whether the battery is put in place on the compartment base. If the controller has received the signal, it indicates that the battery has been put in place on the compartment base. If the controller does not receive the signal, it indicates that the battery is not put in place on the compartment base. Use of the controller, instead of the sensor, to confirm whether the battery is put in place on the compartment base can improve the detection accuracy of the positioning apparatus.

In a possible implementation, the controller is further configured to adjust the position of the battery on the compartment base when it is detected that the battery is not put in place on the compartment base.

In the embodiments of the present application, when the controller confirms that the battery is not put in place on the compartment base, the controller readjusts the position of the battery on the compartment base, so that the battery can finally be successfully put on the compartment base.

A second aspect provides a compartment base, including: a base body; and the positioning apparatus as described in any possible implementation of the first aspect.

In a possible implementation, the base body is square; a first side edge of the base body is 850 mm; and a second side edge is 2480 mm.

A third aspect provides a positioning method for a battery, applied to a positioning apparatus. The positioning apparatus includes a guide post, a positioning pin, and a sensor. The method includes: when the battery is put in the compartment base, guiding a position of the battery through the guide post, and positioning the battery through the positioning pin; and detecting, through the sensor, whether the battery is put in place on the compartment base.

In a possible implementation, the guiding a position of the battery through the guide post includes: when a position deviation of the battery on the compartment base is maintained within 100 mm, adjusting the position of the battery on the compartment base through the guide post.

In a possible implementation, the positioning the battery through the positioning pin includes: when a position deviation of the battery on the compartment base is maintained within 5 mm, adjusting the position of the battery on the compartment base through the positioning pin.

In a possible implementation, the detecting, through the sensor, whether the battery is put in place on the compartment base includes: detecting, by the sensor, a condition of the battery on the compartment base and sending a sensing signal to the controller; determining, by the controller, that the battery is put in place on the compartment base if the sensing signal is received; or determining, by the controller, that the battery is not put in place on the compartment base if the sensing signal is not received.

In a possible implementation, the method further includes: adjusting, by the controller, the position of the battery on the compartment base when it is detected that the battery is not put in place on the compartment base.

A fourth aspect provides a battery swapping station, including the positioning apparatus as described in any possible implementation of the first aspect.

A fifth aspect provides an electrical apparatus, including the positioning apparatus as described in any possible implementation of the first aspect.

### Description of Drawings

In order to illustrate the technical solutions of the embodiments of the present application more clearly, the following briefly introduces the drawings required in the embodiments of the present application. Obviously, the drawings described below are only some embodiments of the present application. For those of ordinary skill in the art, other drawings can also be obtained according to the drawings without any creative effort.
FIG. 1 is a schematic diagram of an application scenario disclosed according to an embodiment of the present application;
FIG. 2 is a schematic structural diagram of a positioning apparatus for a battery according to an embodiment of the present application;
FIG. 3 is a front view of a positioning apparatus for a battery according to an embodiment of the present application;
FIG. 4 is a top view of a compartment base according to an embodiment of the present application; and
FIG. 5 a schematic flowchart of a positioning method for a battery according to an embodiment of the present application.

### Description of reference numerals:

battery swapping station 11, vehicle 12, battery swapping cabinet 13, positioning apparatus 16, compartment base 18;
third battery management unit 121, first battery management unit 131, charging unit 132, charging compartment 133, battery 141/142, second battery management unit 143, station control system 151, cloud server 152, guide post 161, positioning pin 162, sensor 163, base body 181;
slope structure 1611, height H, first side edge D 1, second side edge D2.

### Detailed Description

The embodiments of the technical solutions of the present application are described in detail in combination with the accompanying drawings below. The following embodiments are only configured to more clearly illustrate the technical solutions of the present application, and therefore are only used as examples and cannot be configured to limit the scope of protection of the present application.

Unless otherwise defined, all technical and scientific terms used herein have the same meaning as commonly understood by those skilled in the art of the present application. The terms used herein are intended only for the purpose of describing specific embodiments and are not intended to limit the present application. The terms "include" and "has/have", as well as any variations thereof, in the specification and claims of the present application, as well as the accompanying drawings, are intended to encompass non-exclusive inclusion.

In the description of the embodiments of the present application, the technical terms "first", "second", and the like are only for distinguishing different objects, and may not be understood as indicating or implying the relative importance or implicitly indicating the number, specific order or primary and secondary relations of the technical features indicated. In the description of the embodiments of the present application, "plurality" means more than two, unless otherwise expressly and specifically defined.

Reference to "an embodiment" herein means that a particular feature, structure or characteristic described in conjunction with an embodiment may be included in at least one embodiment of the present application. The phrase shown in various locations in the specification may not necessarily refer to a same embodiment, and is not an independent or optional embodiment exclusive from another embodiment. It is explicitly and implicitly understood by those skilled in the art that the embodiments described herein may be combined with other embodiments.

In the descriptions of the embodiments of the present application, the term "and/or" only describes an association relation of associated objects and represents that three relations may exist. For example, A and/or B may represent three situations: A exists alone; A and B exist simultaneously; and B exists alone. In addition, the character "/" herein usually indicates an "or" relation between associated objects.

In the descriptions of the embodiments of present application, orientations or positional relationships indicated by the technical terms "center", "longitudinal", "transverse", "length", "width", "thickness", "upper", "lower", "front", "rear", "left", "right", "vertical", "horizontal", "top", "bottom", "inner", "outer", "clockwise", "anticlockwise", "axial", "radial", "circumferential" and the like are orientations or positional relationships as shown in the drawings, and are only for the purpose of facilitating and simplifying the descriptions of the embodiments of the present application instead of indicating or implying that devices or elements indicated must have particular orientations, and be constructed and operated in the particular orientations, so that these terms are not construed as limiting the embodiments of the present application.

In the descriptions of the embodiments of the present application, unless otherwise expressly specified and limited, the technical terms "mount," "connect", "connection", "fix" and the like should be understood in a broad sense, such as, a fixed connection, a detachable connection, an integrated connection, a mechanical connection, an electrical connection, a direct connection, an indirect connection through an intermediate medium, an internal communication of two elements, or interaction between two elements. Those of ordinary skill in the art can understand the specific meanings of the above terms in the embodiments of the present application according to specific situations.

With the development of a new energy technology, batteries are applied to more and more fields. For example, batteries can provide power for or supply power to electrical apparatuses. For example, a battery can serve as a power source to supply power to a vehicle. In a case that a battery in a vehicle is insufficient to support further running of the vehicle, a charging device such as a charging pile can be used to charge the electrical apparatus, that is, to charge the vehicle, namely, to charge the battery in the vehicle, so as to achieve charging and discharging cycles of the battery. However, it takes long time to charge the battery, which limits the endurance of the vehicle.

In order to improve the endurance of the vehicle, a battery swapping technology has come into being. The battery swapping technology adopts a mode of "vehicle-battery separation". A battery swapping service can be provided for vehicles through a battery swapping station, that is, a battery can be quickly removed from or mounted in a vehicle. The battery removed from the vehicle can be put into a battery swapping cabinet of the battery swapping station for charging in preparation for battery swapping for vehicles entering the battery swapping station later.

During the battery swapping of the battery, how to successfully put a battery on a compartment base is an urgent problem needing to be solved.

In view of this, the embodiments of the present application provide a positioning apparatus and method for a battery, which can successfully put a battery on a compartment base in a simple way during battery swapping.

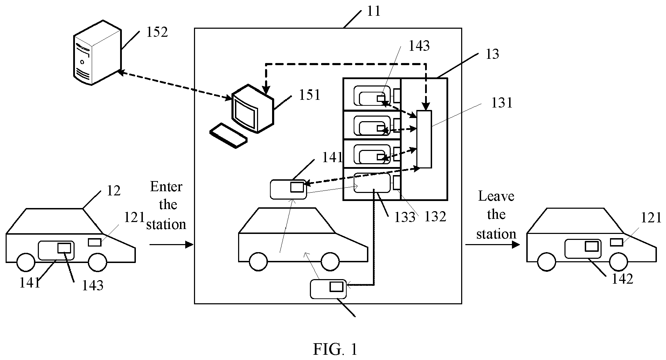

FIG. 1 shows a schematic diagram of an application scenario of a method for swapping a battery according to an embodiment of the present application. As shown in FIG. 1, the application scenario of method for swapping the battery may involve a battery swapping station 11, a vehicle 12, and the battery.

The battery swapping station 11 may refer to a place that provides a battery swapping service for vehicles. For example, the battery swapping station 11 may be a fixed place, or the battery swapping station 11 may be a movable place such as a mobile battery swapping vehicle, which is not limited here.

The vehicle 12 may be detachably connected to the battery. In some examples, the vehicle 12 may be a car, a truck, or another vehicle that uses a power battery as a power source.

The battery may include a battery arranged in the vehicle 12 and a battery located in the battery swapping station 11 for battery swapping. For convenience of distinguishing, as shown in FIG. 1, the battery to be swapped in the vehicle 12 is referred to as a battery 141, and the battery for battery swapping in the battery swapping station is referred to as a battery 142. The battery may be a lithium-ion battery, a lithium-metal battery, a lead-acid battery, a nickel-cadmium battery, a nickel-hydride battery, a lithium-sulfur battery, a lithium-air battery, a sodium-ion battery, or the like, which is not limited here. In terms of scale, the battery may be a battery cell, a battery module, or a battery pack, which is not limited here. In addition to serving as the power source to supply power to a motor of the vehicle 12, the battery may also supply power to other electrical apparatuses in the vehicle 12. For example, the battery can also supply power to an in-vehicle air conditioner, a vehicle-mounted player, and the like.

After the vehicle 12 provided with the battery 141 is driven into the battery swapping station 11, the battery swapping station 11 removes the battery 141 from the vehicle 12 through a battery swapping apparatus; the battery 142 is taken out of the battery swapping station 11; and the battery 142 is mounted onto the vehicle 12. Afterwards, the vehicle 12 provided with the battery 142 can be driven away from the battery swapping station 11. Through the battery swapping technology, the vehicle can be quickly replenished with energy within a few minutes or even tens of seconds, which improves the user experience.

As shown in FIG. 1, a battery swapping cabinet 13 may be arranged in the battery swapping station 11. The battery swapping cabinet 13 includes a first battery management unit 131 and a charging unit 132. The battery swapping cabinet 13 may also be provided with a plurality of charging compartments 133, and batteries for battery swapping may be put in the charging compartments 133 of the battery swapping cabinet 13 of the battery swapping station 11. The first battery management unit 131 may be a battery management unit arranged in the battery swapping cabinet 13. The charging unit 132 can charge the batteries in the charging compartments 133. In some examples, the charging unit may include an alternating current/direct current module, that is, a component, an apparatus, or a device such as an AC/DC module with a charging function, which is not limited here. The charging unit 132 can be arranged in one-to-one correspondence with the charging compartments 133, or the plurality of charging compartments 133 can share one charging unit 132, which is not limited here.

The battery may be correspondingly provided with a second battery management unit 143. The vehicle 12 is further provided with a third battery management unit 121, and the third battery management unit 121 can be configured to manage a plurality of batteries 141 mounted on the vehicle.

The battery swapping station 11 may also be correspondingly provided with a management apparatus. The management apparatus may be of a centralized structure or a distributed structure, which is not limited here. The management apparatus may be arranged inside the battery swapping station 11 or outside the battery swapping station 11. In a case that the management apparatus is of the distributed structure, the management apparatus may also be arranged partially inside the battery swapping station 11 and partially outside the battery swapping station 11. For example, as shown in FIG. 1, the management apparatus may include a station control system 151 inside the battery swapping station 11 and a cloud server 152 outside the battery swapping station 11. This is not limited here. The station control system 151 can also be referred to as a battery management unit in the battery swapping station 11 and is configured to manage and control the battery 142 in the battery swapping station 11.

Optionally, the first battery management unit 131 can communicate and interact with other units, modules, apparatuses, and the like in a wired or wireless manner. The second battery management unit 143 can communicate and interact with other units, modules, apparatuses, and the like in a wired or wireless manner. The third battery management unit 121 can communicate and interact with other units, modules, apparatuses, and the like in a wired or wireless manner. The station control system 151 can communicate and interact with other units, modules, apparatuses, and the like in a wired or wireless manner. The wired communication manner includes, for example, a controller area network (CAN) communication bus. The wireless communication manner includes, for example, various manners such as Bluetooth communication, WiFi communication, and ZigBee communication, and will not be limited here.

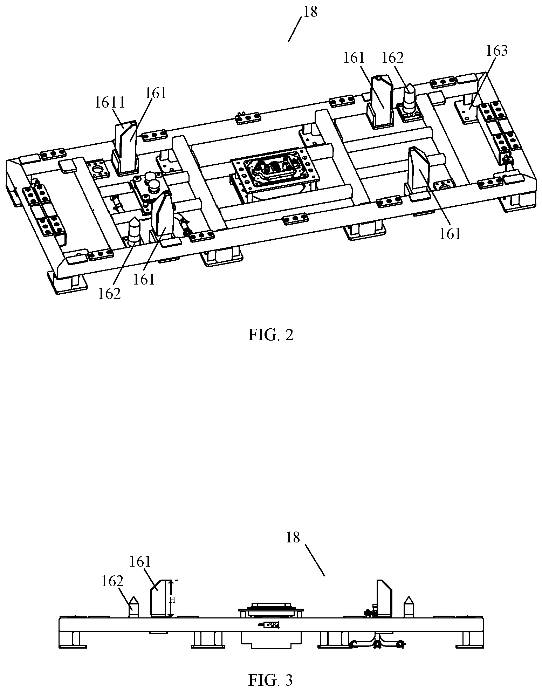

FIG. 2 shows a schematic structural diagram of a positioning apparatus for a battery according to an embodiment of the present application. As shown in FIG. 2, the positioning apparatus 16 includes: guide posts 161 configured to guide a position of a battery 141; positioning pins 162 configured to position the battery 141; and a sensor 163 configured to detect whether the battery 141 is put in place on a compartment base 18.

The guide posts 161 are components that guide the battery 141 to be correctly put on the compartment base 18. In the embodiments of the present application, a material of the guide posts 161 may be bearing steel or easy-turn iron, but the present application has no special limitation on the material of the guide posts 161.

The positioning pins 162 are components that limit the degree of freedom of the battery 141 and are configured to precisely position the battery 141. The positioning pins 162 perform positioning by cylindrical surfaces of the positioning pins 162 and a positioning reference hole on the battery 141. In the embodiments of the present application, the positioning pins 162 may be fixed positioning pins and the like. The present application does not limit the type of the positioning pins 162. In addition, slope structures can also be arranged on the positioning pin 162 to adjust the small position deviation of the battery 141 on the compartment base 18.

The sensor 163 is a detection apparatus that can sense measured information, convert the sensed information into an electrical signal or information in other desired form, and output the signal or information according to a certain rule to meet the requirements for transmitting, processing, storing, displaying, recording, and controlling the information. In the embodiments of the present application, when a linear distance between the battery 141 and the sensor 163 is less than a certain distance, the sensor 163 can sense the battery 141. The sensor 163 can process the distance data of the battery 141 by itself to determine whether the battery 141 is put in place on the compartment base 18. Or, the sensor 163 can be just a distance sensor that only detects the distance data between the battery 141 and the sensor 163 and then transmits the data to a cloud or a station control system or a cloud, and the station control system or the cloud determines whether the battery 141 is put in place. The present application does not limit this.

When the battery 141 is ready to be put into the compartment base 18, the battery 141 is put toward a direction where the compartment base 18 is located. When the battery 141 is just put into the compartment base 18, if there is a large position error between the battery 141 and the compartment base 18, the guide posts 161 in the positioning apparatus 16 can guide the position of the battery 141 and adjust the large position error of the battery 141. As the battery 141 continues to be put on the compartment base 18, when the battery 141 has a small error on the compartment base 18, the positioning pins 162 in the positioning apparatus 16 can precisely position the battery 141 and adjust the small error of the battery 141. Finally, when the battery 141 is completely put on the compartment base 18, the sensor 163 is used to detect whether the battery 141 is put in place on the compartment base 18.

In this embodiment, when the battery 141 is put into the compartment base 18, the position of the battery 141 in the compartment base 18 is calibrated using the positioning apparatus 16 including the guide posts 161, the positioning pins 162, and the sensor 163, so that the battery 141 can be successfully put on the compartment base 18.

Optionally, the guide posts 161 are arranged at the compartment base 18.

The guide posts 161 guide the position of the battery 141 on the compartment base 18 and adjusts a position deviation of the battery 141 in the process of putting the battery 141 into the compartment base 18.

The guide posts 161 can be perpendicular to the compartment base 18, or arranged at a certain angle with the compartment base 18. The present application will not limit this. In addition, the guide posts 161 can be directly welded on the compartment base 18, or can be connected to the compartment base 18 through bolts. The present application does not impose any restrictions on a connection manner between the guide posts 161 and the compartment base 18, either.

In this embodiment, the guide posts 161 arranged at the compartment base 18 can effectively act on the battery 141, thereby effectively adjusting the position deviation of the battery 141.

Optionally, the guide posts 161 protrude from the compartment base 18.

The guide posts 161 are arranged on the compartment base 18 to adjust the position of the battery 141 on the compartment base 18.

In this embodiment, the guide posts 161 protrudes from the compartment base 18, which can ensure the position adjustment effect of the guide posts 161 on the battery 141.

Optionally, as shown in FIG. 2, each guide post 161 is provided with at least one slope structure 1611.

In the process of putting the battery 141 into the compartment base 18, the guide posts 161 first calibrate the position of the battery 141. The battery 141 moves on the guide posts 161 to achieve the position adjustment.

In the embodiments of the present application, a slope of the slope structure 1611 is a cross section having a certain inclination angle with one end of the guide post 161 far from the compartment base 18. The inclination angle can be 10°, 45°, or another value. The present application will not limit this. If the inclination angle is larger between 0° and 90°, it is easier for the battery 141 to move. In an actual application process, the inclination angle of the slope of the slope structure 1611 can be adjusted as needed. In addition, the slope of the slope structure 1611 may be trapezoid, square, or in another shape. The present application does not impose any restrictions on this.

In this embodiment, the slope structures 1611 are arranged on the guide posts 161, and the battery 141 can easily move on the slope structures 1611, thereby achieving the position adjustment performed on the battery 141 by the guide posts 161.

Optionally, a ratio of a cross-sectional area of one end of each guide post 161 far from the compartment base 18 to a cross-sectional area of one end close to the compartment base 18 ranges from 1: 10 to 1: 2.

The guide posts 161 protrude from the compartment base 18, and the protruding portions are provided with slope structures 1611. The guide posts 161 can use the slope structures 1611 to better guide the position of the battery 141. The ratio of the cross-sectional area of the end of the guide post 161 far from the compartment base 18 to the cross-sectional area of the end close to the compartment base 18 is limited to 1: 10 to 1: 2, that is, the cross-sectional area of the end of the guide post 161 far from the compartment base 18 is smaller than the cross-sectional area of the end of the guide post 161 close to the compartment base 18.

In this embodiment, the guide posts 161 can stably support the battery 141 due to the cross-sectional area of the end close to the compartment base 18, namely, due to a large bottom area. The cross-sectional area of the end far from the compartment base 18, that is, a small area of a position that is in contact with the battery 141, can further improve the convenience of guiding the battery by the guide posts 161.

Optionally, the positioning pins 162 are arranged at the compartment base 18.

The positioning pins 162 are components configured to precisely position the battery 141 and perform small-range position adjustment. Optionally, the positioning pins 162 can be perpendicular to the compartment base 18. In addition, the positioning pins 162 can be directly welded on the compartment base 18, or can be connected to the compartment base 18 through bolts. The present application does not impose any restrictions on a connection manner between the positioning pins 162 and the compartment base 18.

In addition, the positioning pins 162 and the battery 141 can be in sliding fit, interference fit, overfit with each other. The present application does not impose any restrictions on this.

The positioning pins 162 precisely position the battery 141 on the compartment base 18 and adjusts the position deviation of the battery 141 in the process of putting the battery 141 into the compartment base 18.

In this embodiment, the positioning pins 162 arranged on the compartment base 18 can effectively act on the battery 141, thereby effectively positioning the battery 141 and adjusting the position deviation of the battery 141.

Optionally, the positioning pins 162 protrude from the compartment base 18.

In this embodiment, the positioning pins 162 are arranged on the compartment base 18 and are configured to adjust the position of the battery 141 put on the compartment base 18. The positioning pins 162 protrude from the compartment base 18, which can ensure the positioning and position adjustment effects of the positioning pins 162 on the battery 141.

Optionally, a distance between the positioning pins 162 and the guide posts 161 is within a preset range.

In the embodiments of the present application, the distance is a distance between two closest points of the guide posts 161 and the positioning pins 162.

In the process of putting the battery 141 into the compartment base 18, the guide posts 161 first adjust the position of the battery 141, and then the positioning pins 162 precisely position the battery 141, that is, perform small-range adjustment. That is, both the guide posts 161 and the positioning pins 162 adjust the position of the battery 141 on the compartment base 18 together. If the distance therebetween is too large, a cooperation effect will be greatly reduced.

In this embodiment, both the guide posts 161 and the positioning pins 162 play a role of adjusting the position of the battery 141 on the compartment base 18. Keeping the positions of both the guide posts 161 and the positioning pins 162 within a certain range is conductive to causing the guide posts 161 and the positioning pins 162 to act on the battery 141 at the same time, thereby enhancing the position adjustment effect on the battery 141 on the compartment base 18.

Optionally, the preset range is 10-50 mm.

In this embodiment, keeping the position distance between the guide posts 161 and the positioning pins 162 within 10-50 mm can enhance the position adjustment effect on the battery 141 on the compartment base 18.

Optionally, a quantity of the guide posts 161 and a quantity of the positioning pins 162 are at least four, respectively.

The battery 141 is put into the compartment base 18, and there will be no large area difference between the battery 141 and the compartment base 18. There will be large area differences between both the guide posts 161 and the positioning pins 162 and the battery 141. Therefore, if there is only one guide post 161 or one positioning pin 162, the guide post 161 and the positioning pin 162 will have a minimal position adjustment effect on the battery 141.

In this embodiment, the quantity of the guide posts 161 and the quantity of the positioning pins 162 are set to be at least four, which is conductive to causing the guide posts 161 and the positioning pins 162 to adjust the position of the battery 141 in multiple directions and enhancing their position adjustment effects on the battery 141.

Optionally, the four guide posts 161 and the four positioning pins 162 are respectively distributed symmetrically about a center of the compartment base 18.

In the embodiments of the present application, the center of the compartment base 18 is a point, which is equidistant from two parallel sides of the compartment base 18, on the compartment base 18.

In order to allow the guide posts 161 and the positioning pins 162 to act on multiple portions of the battery 141, the quantity of the guide posts 161 and the quantity of the positioning pins 162 are set to be at least four. The reasonable position distribution of the guide posts 161 and the positioning pins 162 is also conducive to further enhancing the position adjustment effect on the battery 141.

In this embodiment, the at least four guide posts 161 and the at least four positioning pins 162 are symmetrically distributed about the center of the compartment base 18 respectively, so that acting forces on the battery 141 between the at least four guide posts 161 and the at least four positioning pins 162 are balanced to further enhance the position adjustment on the battery 141, thereby ensuring that the battery 141 is successfully put onto the compartment base 18.

Optionally, the positioning pins 162 are far from the center relative to the guide posts 161.

The guide posts 161 are configured to guide the position of the battery when the battery 141 has a large position error on the compartment base 18. The positioning pins 162 are configured to precisely position the battery 141 on the compartment base 18 after the guide posts 161 adjust the position of the battery 141. The positioning pins 162 are far from the center relative to the guide posts 161, that is, compared with the guide posts 161, the positioning pins 162 are far from the center of the compartment base 18.

In this embodiment, compared with the guide posts 161, the positioning pins 162 are far from the center of the compartment base 18. In this way, after the guide posts 161 guide the position of the battery 141 to eliminate the large position error, the positioning pins 162 then precisely position the battery 141.

Optionally, the guide posts 161 and the positioning pins 162 are matched with positioning slots of the battery 141.

The guide posts 161 and the positioning pins 162 are both arranged on a plane where the compartment base 18 is located, and protrude from the compartment base 18. The guide posts and the positioning pins work in a process of lowering the battery 141 and putting it on the compartment base. As the battery 141 gets closer to the compartment base 18, the protruding guide posts 161 and positioning pins 162 should not hinder the battery 141 from continuing to be put into the compartment base 18.

In this embodiment, the battery 141 is provided with a plurality of positioning slots. If the guide posts 161 and the positioning pins 162 are matched with the positioning slots on the battery 141, the battery 141 will be successfully put on the compartment base 18.

Optionally, a radial distance of each guide post 161 on the compartment base does not exceed 50 mm.

The radial distance of the guide post 161 on the plane where the compartment base 18 is located does not exceed 50 mm. That is, regardless of the shape of the guide post 161, a maximum size on the compartment base 18 does not exceed 50 mm.

In this embodiment, since the radial distance of the guide post 161 on the compartment base 18 is limited to not exceed 50 mm, the guide post 161 will not occupy an excessive area of the compartment base 18 while achieving the effect of guiding the position of the battery 141.

Optionally, each guide post 161 is rectangular, and the guide post 161 on the compartment base 18 has a length not exceeding 40 mm and a width not exceeding 30 mm.

In order to prevent the guide post 161 from occupying a large area of the compartment base 18, the radial distance of the guide post 161 on the compartment base 18 is limited to not exceed 50 mm. When the guide post 161 is a cuboid, a cross section of the guide post 161 on the plane where the compartment base 18 is located is rectangular. The length of the rectangle does not exceed 40 mm, and the width does not exceed 30 mm, that is, a diagonal of the rectangle does not exceed 50 mm, which meets the requirement that the radial distance does not exceed 50 mm.

In this embodiment, each guide post 161 is a regularly-shaped cuboid, which can lower the difficulty in the production process and facilitate manufacturing.

In the embodiments of the present application, the guide post 161 may not only be cuboid, but also be cylindrical or in another shape. The present application does not impose any restrictions on the shape of the guide post 161.

FIG. 3 is a front view of a positioning apparatus for a battery according to an embodiment of the present application. As shown in FIG. 3, a height H of the guide post relative to the compartment base does not exceed 300 mm.

The guide post 161 is arranged on the plane where the compartment base 18 is located and protrudes from the compartment base 18. That is, the guide post 161 has a certain height H relative to the compartment base 18. If the height H is too large, the guide post may collide with the positioning slot on the battery 141 after the battery 141 is put in the compartment base.

In this embodiment, the height H of the guide post 161 relative to the compartment base 18 is limited to not exceed 300 mm, so that the guide post 161 can be matched with the positioning slot on the battery 18.

Optionally, a radial distance of the positioning pin 162 on the compartment base 18 does not exceed 10 mm.

The radial distance of the positioning pin 162 on the compartment base 18 does not exceed 10 mm, that is, regardless of the shape of the positioning pin 162, a maximum size on the compartment base 18 does not exceed 10 mm.

In this embodiment, since the radial distance of the positioning pin 162 on the compartment base 18 is limited to not exceed 10 mm, the positioning pin 162 will not occupy an excessive area of the compartment base 18 while achieving the effect of precisely positioning the battery 141.

In the embodiments of the present application, the positioning pin 162 may not only be cuboid, but also be cylindrical or in another shape. The present application does not impose any restrictions on the shape of the positioning pin 162.

Optionally, a quantity of the sensor 163 is at least one.

In this embodiment, the sensor 163 is configured to detect whether the battery 141 is put in place on the compartment base 18.

Optionally, the sensor 163 is arranged diagonally.

The sensor 163 is configured to detect whether the battery 141 is put in place on the compartment base 18. An appropriate increase in the quantity of the sensor 163 and setting the position of the sensor 163 can improve the detection accuracy.

In this embodiment, the sensor 163 is arranged diagonally, which can enhance the detection effect of the sensor 163 on whether the battery 141 is put in place.

Optionally, a sensing error of the sensor 163 does not exceed 10 mm.

In this embodiment, the sensor 163 is configured to detect whether the battery 141 is put in place on the compartment base 18. If a distance between the battery 141 and the sensor 163 does not exceed 10 mm, although the battery 141 has a certain position error on the compartment base 18, the battery is still successfully put on the compartment base 18. If a distance between the battery 141 and the sensor 163 exceeds 10 mm, it indicates that the battery 141 is not successfully put on the compartment base 18.

Optionally, the positioning apparatus 16 further includes a controller; the sensor 163 is also configured to detect a condition of the battery 141 on the compartment base 18 and send a sensing signal to the controller; the controller is configured to determine that the battery 141 is put in place on the compartment base 18 if the sensing signal is received; or the controller is configured to confirm that the battery 141 is not put in place on the compartment base 18 if the sensing signal is not received.

The sensor 163 will send the sensing signal to the controller after detecting whether the battery 141 is put in place on the compartment base 18. If the controller has received the signal, it indicates that the battery 141 has been put in place on the compartment base 18. If the controller does not receive the signal, it indicates that the battery 141 is not put in place on the compartment base 18.

In this embodiment, use of the controller, instead of the sensor 163, to confirm whether the battery 141 is put in place on the compartment base 18 can improve the detection accuracy of the positioning apparatus 16.

Optionally, the controller is also configured to adjust the position of the battery 141 on the compartment base 18 when it is detected that the battery 141 is not put in place on the compartment base 18.

In this embodiment, when the controller confirms that the battery 141 is not put in place on the compartment base 18, the controller readjusts the position of the battery 141 on the compartment base 18, so that the battery 141 can finally be successfully put on the compartment base 18. For example, when the controller confirms that the battery 141 is not put in place on the compartment base 18, the controller may send a command to a placement apparatus to put the battery 141 again.

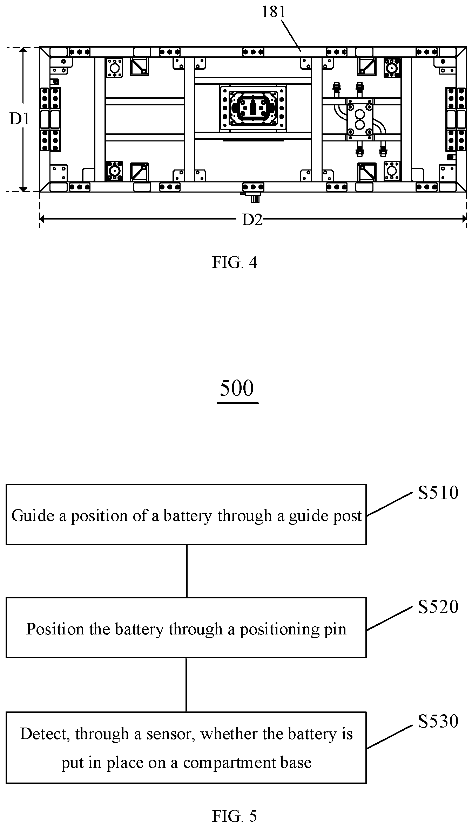

The embodiments of the present application further provide a compartment base 18. FIG. 4 is a top view of a compartment base 18 according to an embodiment of the present application. As shown in FIG. 4, the compartment base 18 includes a base body 181; and the positioning apparatus 16 as described in any one of the foregoing embodiments.

As shown in FIG. 4, the base body 181 is square; a first side edge D1 of the base body 181 is 850 mm; and a second side edge D2 is 2480 mm.

The embodiments of the present application further provide a positioning method for a battery, applied to the positioning apparatus 16. The positioning apparatus 16 includes guide posts 161, positioning pins 162, and a sensor 163. FIG. 5 a schematic flowchart of a positioning method 500 for a battery according to an embodiment of the present application. As shown in FIG. 5, the method 500 may include:
S510, when the battery 141 is put into a compartment base 18, a position of the battery 141 is guided through the guide posts 161;
S520, the battery 141 is positioned through the positioning pins 162; and
S530, whether the battery 141 is put in place on the compartment base 18 is detected through the sensor 163.

Optionally, a position of the battery 141 is guided through the guide posts 161, which includes: when a position deviation of the battery 141 on the compartment base 18 is maintained within 100 mm, the position of the battery 141 on the compartment base 18 is adjusted through the guide posts 161.

Optionally, the battery 141 is positioned through the positioning pins 162, which includes: when a position deviation of the battery 141 on the compartment base 18 is maintained within 5 mm, the position of the battery 141 on the compartment base 18 is adjusted through the positioning pins 162.

Optionally, whether the battery 141 is put in place on the compartment base 18 is detected through the sensor 163, which includes: the sensor 163 detects a condition of the battery 141 on the compartment base 18 and sends a sensing signal to the controller; the controller determines that the battery 141 is put in place on the compartment base 18 if the sensing signal is received; or the controller determines that the battery 141 is not put in place on the compartment base 18 if the sensing signal is not received.

Optionally, the controller adjusts the position of the battery 141 on the compartment base 18 when it is detected that the battery 141 is not put in place on the compartment base 18.

The embodiments of the present application further provide a battery swapping station 11, including the positioning apparatus 16 in any one of the foregoing embodiments.

The embodiments of the present application further provide an electrical apparatus, including the positioning apparatus 16 in any one of the foregoing embodiments.

In the embodiments of the present application, the electrical apparatus may be a vehicle. In the future, it may also be an apparatus that uses a battery to provide power or electricity, such as a robot, a ship, and an airplane. The embodiments of the present application do not impose any restrictions on the electrical apparatus.

Although the present application has been described with reference to the preferred embodiments, various improvements can be made thereto and components thereof can be replaced with equivalents without departing from the scope of the present application. In particular, the technical features mentioned in the various embodiments can be combined in any manner as long as there is no structural conflict. The present application is not limited to the specific embodiments disclosed herein, but includes all technical solutions falling within the scope of the claims.

## Claims

1. A positioning apparatus for a battery, comprising:
a guide post configured to guide a position of the battery;
a positioning pin configured to position the battery; and
a sensor configured to detect whether the battery is put in place on a compartment base.

2. The positioning apparatus according to claim 1, wherein the guide post is arranged on the compartment base.

3. The positioning apparatus according to claim 1 or 2, wherein the guide post protrudes from the compartment base.

4. The positioning apparatus according to any one of claims 1 to 3, wherein the guide post is provided with at least one slope structure.

5. The positioning apparatus according to claim 3 or 4, wherein a ratio of a cross-sectional area of one end of the guide post far from the compartment base to a cross-sectional area of one end close to the compartment base ranges from 1: 10 to 1: 2.

6. The positioning apparatus according to claim 1, wherein the positioning pin is arranged on the compartment base.

7. The positioning apparatus according to claim 1 or 6, wherein the positioning pin protrudes from the compartment base.

8. The positioning apparatus according to claim 7, wherein a distance between the positioning pin and the guide post is within a preset range.

9. The positioning apparatus according to claim 8, wherein the preset range is 10-50 mm.

10. The positioning apparatus according to any one of claims 1 to 9, wherein a quantity of the guide post and a quantity of the positioning pin are at least four, respectively.

11. The positioning apparatus according to claim 10, wherein the guide posts and the positioning pins are symmetrically distributed about a center of the compartment base.

12. The positioning apparatus according to claim 11, wherein the positioning pins are far from the center relative to the guide posts.

13. The positioning apparatus according to any one of claims 1 to 12, wherein the guide posts and the positioning pins are matched with positioning slots of the battery.

14. The positioning apparatus according to claim 2, wherein a radial distance of the guide post on the compartment base does not exceed 50 mm.

15. The positioning apparatus according to claim 14, wherein the guide post is a cuboid, and the guide post on the compartment base has a length not exceeding 40 mm and a width not exceeding 30 mm.

16. The positioning apparatus according to claim 14 or 15, wherein a height of the guide post relative to the compartment base does not exceed 300 mm.

17. The positioning apparatus according to claim 2, wherein a radial distance of the positioning pin on the compartment base does not exceed 10 mm.

18. The positioning apparatus according to claim 1, wherein a quantity of the sensor is at least one.

19. The positioning apparatus according to claim 18, wherein the sensor is arranged diagonally.

20. The positioning apparatus according to claim 18 or 19, wherein a sensing error of the sensor does not exceed 10 mm.

21. The positioning apparatus according to claim 1, further comprising a controller,
the sensor is further configured to detect a condition of the battery on the compartment base and send a sensing signal to the controller;
the controller is configured to determine that the battery is put in place on the compartment base if the sensing signal is received; or
the controller is configured to confirm that the battery is not put in place on the compartment base if the sensing signal is not received.

22. The positioning apparatus according to claim 21, wherein the controller is further configured to adjust the position of the battery on the compartment base when it is detected that the battery is not put in place on the compartment base.

23. A compartment base, comprising:
a base body; and
the positioning apparatus according to any one of claims 1 to 22.

24. The compartment base according to claim 23, wherein the base body is square; a first side edge of the base body is 850 mm; and a second side edge is 2480 mm.

25. A positioning method for a battery, applied to a positioning apparatus, wherein the positioning apparatus comprises a guide post, a positioning pin, and a sensor, and the method comprises:
when the battery is put in the compartment base, guiding a position of the battery through the guide post, and positioning the battery through the positioning pin; and
detecting, through the sensor, whether the battery is put in place on the compartment base.

26. The positioning method according to claim 25, wherein the guiding a position of the battery through the guide post comprises:
when a position deviation of the battery on the compartment base is maintained within 100 mm, adjusting the position of the battery on the compartment base through the guide post.

27. The positioning method according to claim 25, wherein the positioning the battery through the positioning pin comprises:
when a position deviation of the battery on the compartment base is maintained within 5 mm, adjusting the position of the battery on the compartment base through the guide post.

28. The positioning method according to claim 25, wherein the detecting, through the sensor, whether the battery is put in place on the compartment base comprises:
detecting, by the sensor, a condition of the battery on the compartment base and sending a sensing signal to a controller;
determining, by the controller, that the battery is put in place on the compartment base if the sensing signal is received; or
confirming, by the controller, that the battery is not put in place on the compartment base if the sensing signal is not received.

29. The positioning method according to claim 28, wherein the method further comprises:
adjusting, by the controller, the position of the battery on the compartment base when it is detected that the battery is not put in place on the compartment base.

30. A battery swapping station, comprising:
the positioning apparatus according to any one of claims 1 to 22.

31. An electrical apparatus, comprising:
the positioning apparatus according to any one of claims 1 to 22.
